# EUROPEAN PATENT APPLICATION

(11) **EP 4 778 957 A1**
(43) Date of publication of application: **22.07.2026**
(21) Application number: 25225712.6
(22) Date of filing: 19.12.2025
(51) Int. Cl.: C08G 73/10, C08G 73/12, C08L 79/08, C09J 179/08

(54) **CURABLE RESIN COMPOSITION**

(30) Priority: 17.01.2025 JP 2025006880
(71) Applicant: SHIN-ETSU CHEMICAL CO., LTD.,, Chiyoda-ku, Tokyo 1000005 (JP)
(72) Inventor: Iguchi, Hiroyuki, Annaka-shi, 3790224 (JP); Tsutsumi, Yoshihiro, Annaka-shi, 3790224 (JP); Iwasaki, Masayuki, Annaka-shi, 3790224 (JP); Kudo, Shunsuke, Annaka-shi, 3790224 (JP)
(74) Representative: Angerhausen, Christoph

(57) **Abstract**

Provided is a curable resin composition including: (A) cyclic imide resins represented by the following formula (1): 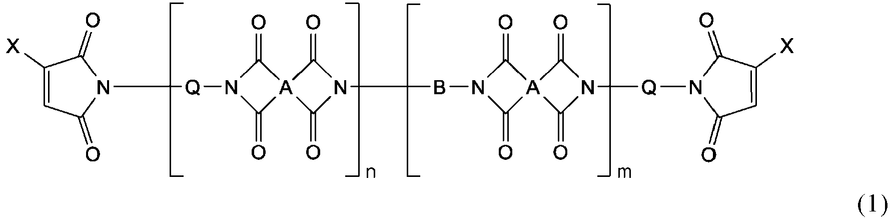 wherein, in the formula (1), A represents a tetravalent organic group including a cyclic structure, Q is, for example, a divalent aliphatic hydrocarbon group, B represents an arylene group, X represents a hydrogen atom or a methyl group, and n and m are independently 0 to 200; and (B) a curing catalyst, wherein the composition exhibits a minimum complex viscosity at 40 to 150°C of (α) 100 to 10,000 Pa·s (as measured at 1 Hz frequency) and (β) 10 to 2,000 Pa·s (as measured at 2 Hz frequency), and results in a cured product that satisfies (γ) a die shear strength with glass at 25°C of 10 MPa or more, and (δ) a die shear strength with copper at 25°C of 10 MPa or more.

## Description

### BACKGROUND OF THE INVENTION

### Field of the Invention

The present invention relates to a curable resin composition.

### Background Art

In recent years, electronic devices, such as mobile communication equipment represented by mobile phones, network infrastructure devices for such equipment including base station devices, servers, and routers, and large computers, handle a greater volume of signals at higher speed year after year. Accordingly, printed wiring boards mounted on these electronic devices are of high-frequency zone, such as 20 GHz region. Thus, insulating materials for printed wiring boards require low relative permittivity and low dielectric loss tangent. Some materials that potentially satisfy these properties are epoxy resins, modified polyphenylene ether resins, and maleimide resins (JP-A-2019-1965, JP-A-2018-28044, JP-A-2020-176190, and JP-A-2021-181531).

The adoption of chiplets in the recent semiconductor packaging has led to an increase in the number of dies mounted in a single package. The increase in the number of dies increases the size of a package. Warpage of packages is problematic in such a situation.

Under this circumstance, glass cores have attracted attention as package substrate cores. Unlike general cores that are made of an organic resin containing glass fibers, glass cores excel in flatness, dimensional stability, and thermal stability. Thus, glass cores are most suited as cores in large-size package substrates and are a focus of active development in recent years (JP-A-2024-72809, JP-A-2024-80860, JP-A-2024-89922, and JP-A-2019-102572).

### SUMMARY OF THE INVENTION

Unfortunately, the fact that glass cores cannot be plated directly with copper makes manufacturing difficult. In an approach, a thin resin layer is formed on the surface of a glass core and copper plating is applied onto the thin film. In this approach, however, through holes in the glass core are filled with the resin and need to be cleaned of the resin in the through holes.

Accordingly, it is an object of the present invention to provide a curable resin composition that does not penetrate into through holes when laminated on a glass core and gives a cured product that exhibits high adhesion to glass and copper and has low relative permittivity and low dielectric loss tangent.

The inventors of the present invention carried out extensive studies directed to solving the problems discussed above and have consequently found that a curable resin composition described below can achieve the object. The present invention has been completed based on the finding.

Specifically, the present invention provides a curable resin composition and other aspects as set forth below.
<1> A curable resin composition comprising:
   (A) cyclic imide resins represented by the following formula (1) in an amount of 20.0 to 99.0% by mass based on the whole mass of the composition, 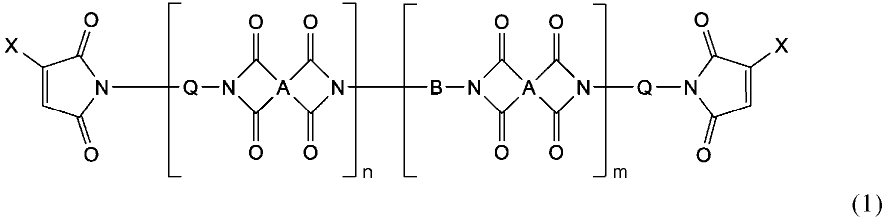 wherein each A independently represents a tetravalent organic group containing a cyclic structure, each Q independently represents a divalent aliphatic hydrocarbon group having 6 or more carbon atoms and optionally containing a heteroatom, or a divalent hydrocarbon group derived from a dimer acid skeleton, each B independently represents an arylene group having 6 or more carbon atoms and optionally containing a heteroatom, each X independently represents a hydrogen atom or a methyl group, n is 0 to 200, m is 0 to 200, and the repeating units in brackets with the subscripts n and m are bonded in an order that is not limited; and
   (B) a curing catalyst in an amount of 0.1 to 5.0% by mass based on the whole mass of the composition,
      wherein the cyclic imide resins (A) contain
         a cyclic imide resin (A1) represented by the formula (1) in which n + m is 21 or greater, and
         a cyclic imide resin (A2) represented by the formula (1) in which n is 0 to 10 and m is 0 to 10,
         wherein the cyclic imide resins (A) contain the cyclic imide resins (A1) and (A2) in a mass ratio of (A1) : (A2) = 98 : 2 to 50 : 50, and
      wherein the curable resin composition satisfies all the following conditions (α) to (δ) in which:
         (α) the resin composition has a minimum complex viscosity at 40 to 150°C of 100 to 10,000 Pa·s as measured at a frequency of 1 Hz,
         (β) the resin composition has a minimum complex viscosity at 40 to 150°C of 10 to 2,000 Pa·s as measured at a frequency of 2 Hz,
         (γ) a cured product of the resin composition has a die shear strength with glass at 25°C of 10 MPa or more, and
         (δ) a cured product of the resin composition has a die shear strength with copper at 25°C of 10 MPa or more.
<2> The curable resin composition according to <1>, wherein the cyclic imide resin (A1) has a weight average molecular weight of 10,000 to 1,000,000.
<3> The curable resin composition according to <1> or <2>, wherein the cyclic imide resin (A2) has a weight average molecular weight of 500 to 30,000.
<4> The curable resin composition according to any one of <1> to <3>, wherein the component (B) is an imidazole compound.
<5> The curable resin composition according to any one of <1> to <4>, wherein the curable resin composition is a glass core bonding film.
<6> A glass core adhesive comprising the curable resin composition according to any one of <1> to <4>.

The curable resin composition of the present invention does not penetrate into through holes when laminated on a glass core and gives a cured product that exhibits high adhesion to glass and copper and has low relative permittivity and low dielectric loss tangent. Thus, the curable resin composition of the present invention is useful as a glass core bonding film or a glass core adhesive.

### DETAILED DESCRIPTION OF THE INVENTION

A curable resin composition of the present invention will be described in detail below.

### [Cyclic imide resins (A)]

The components (A) are cyclic imide resins. The cyclic imide resins are the main component in the curable resin composition of the present invention and include two types of cyclic imide resins (A1) and (A2) that are represented by the following formula (1) and differ from each other in polymerization degree. By virtue of containing the components (A), the curable resin composition of the present invention can give a cured product that has low relative permittivity and low dielectric loss tangent and exhibits high adhesion to glass and copper.

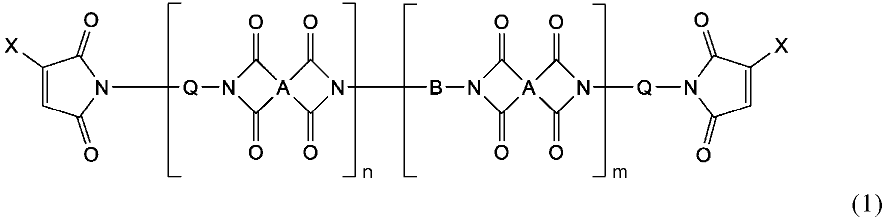

In the formula (1), each A independently represents a tetravalent organic group including a cyclic structure; each Q independently represents a divalent aliphatic hydrocarbon group having 6 or more carbon atoms and optionally containing a heteroatom, or a divalent hydrocarbon group derived from a dimer acid skeleton; each B independently represents an arylene group having 6 or more carbon atoms and optionally containing a heteroatom; each X independently represents a hydrogen atom or a methyl group; n is 0 to 200; m is 0 to 200; and the repeating units in brackets with the subscripts n and m are bonded in an order that is not limited.

Here, the organic groups represented by A in the formula (1) are each independently a tetravalent organic group including a cyclic structure, and, in particular, are preferably each independently a tetravalent organic group represented by any of the formulas below: 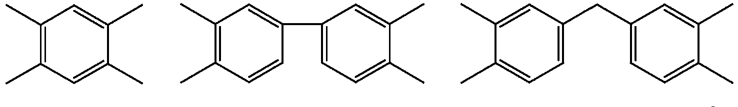 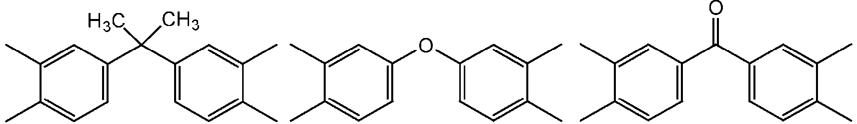 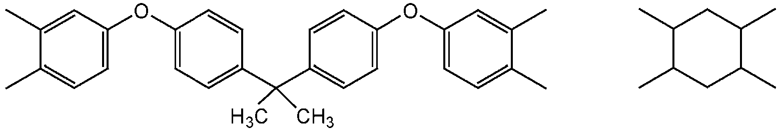 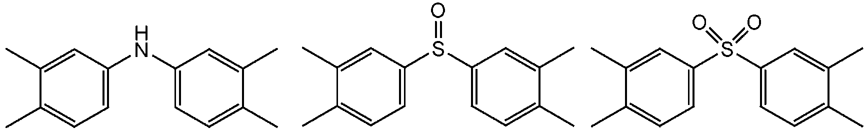 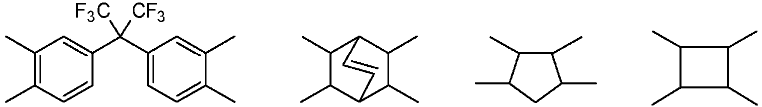 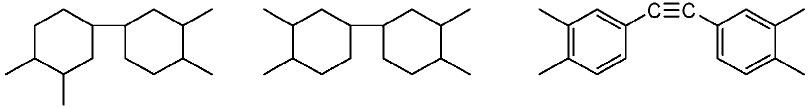 wherein, in the above formulas, the valence bonds that are not bonded to any substituents are bonded to the carbonyl carbon atoms constituting the cyclic imide structures in the formula (1).

The organic groups represented by Q in the formula (1) are each independently a divalent aliphatic hydrocarbon group having 6 or more carbon atoms and optionally containing a heteroatom, or a divalent hydrocarbon group derived from a dimer acid skeleton, and are preferably each independently a divalent hydrocarbon group or a divalent hydrocarbon group derived from a dimer acid skeleton, which are represented by any of the structural formulas below:

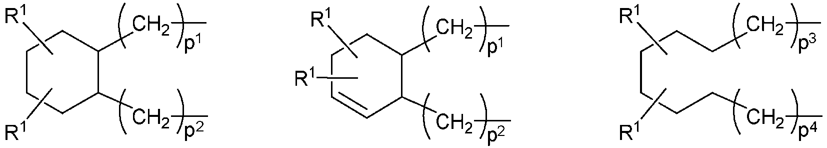

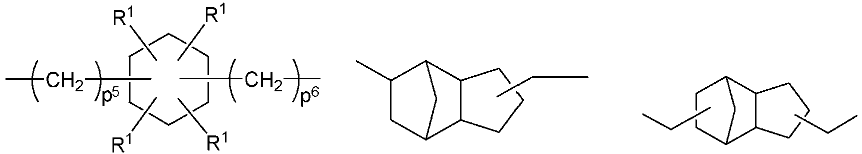

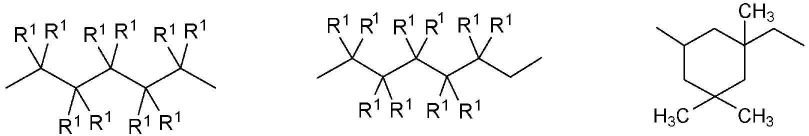

In the above formulas, the valence bonds that are not bonded to any substituents are bonded to the nitrogen atoms constituting the cyclic imide structures in the formula (1).

In the above formulas, each R¹ independently represents a hydrogen atom, or a linear or branched alkyl group having 1 to 20 carbon atoms. Each R¹ independently represents preferably a hydrogen atom, or a linear or branched alkyl group having 1 to 10 carbon atoms, and more preferably a hydrogen atom or a linear alkyl group having 1 to 10 carbon atoms.

In the above formulas, p¹ and p² are each a number of 5 or greater, preferably each a number of 5 to 12, and more preferably each a number of 6 to 10, and may be the same as or different from each other.

In the above formulas, p³ and p⁴ are each a number of 0 or greater, preferably each a number of 0 to 4, and more preferably each a number of 0 to 3, and may be the same as or different from each other.

In the above formulas, p⁵ and p⁶ are each a number of 0 or greater, preferably each a number of 0 to 4, and more preferably each a number of 0 to 2, and may be the same as or different from each other.

The divalent hydrocarbon group derived from a dimer acid skeleton is a group that is derived from a dimer acid formed by the dimerization of a C₁₈ unsaturated fatty acid from a natural raw material, such as a plant oil or fat, into a liquid fatty acid based mainly on the C₃₆ dicarboxylic acid. The skeleton of a dimer acid is not single and has a plurality of structures. That is, a dimer acid has isomeric forms. The term "dimer acid skeleton" as used herein refers to a group derived from a dimer diamine that has a structure resulting from the substitution of carboxyl groups of a dimer acid by primary aminomethyl groups. From the points of view of the heat resistance and the reliability of cured products, the divalent hydrocarbon group derived from a dimer acid skeleton is more preferably one that has undergone hydrogenation reaction and consequently has a reduced number of carbon-carbon double bonds in the hydrocarbon group derived from the dimer acid skeleton.

Due to the fact that a dimer acid is generally formed from a natural raw material, such as a plant oil or fat, the molecules sometimes include a trimer (a trimer acid). In such a case, it is preferable that the hydrocarbon groups derived from a dimer acid represent a high proportion, for example, 95% by mass or more of the dimer acid-derived hydrocarbon groups and the trimer acid-derived hydrocarbon groups. A high proportion of the dimer acid-derived hydrocarbon groups is beneficial in that the composition tends to have excellent dielectric properties and tends to reduce its viscosity easily when heated and thus exhibit excellent formability, and also influences by moisture absorption tend to be small.

As described above, a dimer acid skeleton has a plurality of structures. Thus, herein, the divalent hydrocarbon group derived from a dimer acid skeleton is sometimes written with its average structure, namely, as -C₃₆H₇₀-.

The organic groups represented by B in the formula (1) are each independently an arylene group having 6 or more carbon atoms and optionally containing a heteroatom, and are preferably each independently an arylene group represented by any of the structural formulas below:

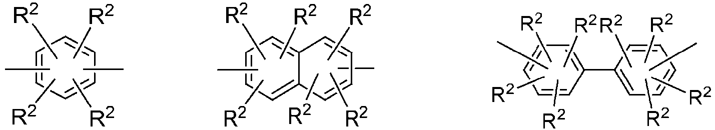

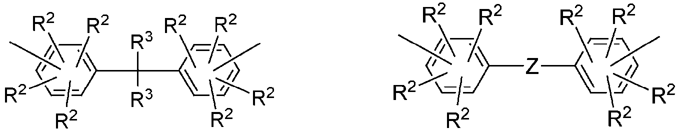

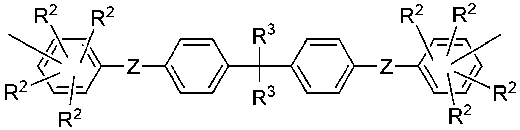

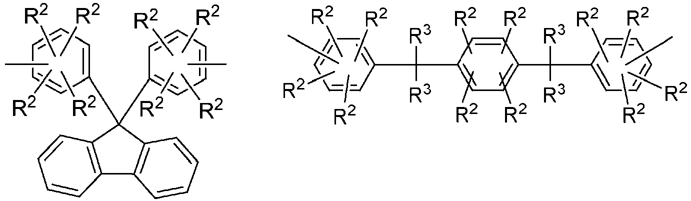

In the above formulas, the valence bonds that are not bonded to any substituents are bonded to the nitrogen atoms constituting the cyclic imide structures in the formula (1).

In the above formulas, each R² independently represents a hydrogen atom, a halogen atom, or an alkyl group having 1 to 6 carbon atoms, and is preferably a hydrogen atom or a methyl group.

In the above formulas, each R³ independently represents a hydrogen atom, a halogen atom, a methyl group, or a trifluoromethyl group, and is preferably a methyl group or a trifluoromethyl group.

In the above formulas, each Z independently represents an oxygen atom, a sulfur atom, or a methylene group, and is preferably an oxygen atom.

In the formula (1), each X independently represents a hydrogen atom or a methyl group.

In the formula (1), n is 0 to 200, preferably 5 to 100, and more preferably 10 to 50.

In the formula (1), m is 0 to 200, preferably 0 to 100, and more preferably 0 to 50.

In the components (A), the cyclic imide resin (A1) is such that n + m is 21 or greater and the cyclic imide resin (A2) is such that n is 0 to 10 and m is 0 to 10 (that is, n + m is 0 to 20).

In the cyclic imide resin (A1), the value of n + m is preferably 21 to 300, more preferably 21 to 250, and more preferably 21 to 200. The cyclic imide resin (A1) is not particularly limited as long as n + m is 21 or greater. When, for example, m = 0, n is preferably 21 to 200, and more preferably 25 to 150. When m ≠ 0, n and m are preferably each independently 11 to 100, and more preferably each independently 15 to 50.

In the cyclic imide resin (A2), the value of n + m is preferably 0 to 16, and more preferably 2 to 10. In the cyclic imide resin (A2), n and m are preferably each independently 0 to 10, more preferably each independently 0 to 8, and still more preferably each independently 0 to 5.

The weight average molecular weight (Mw) of the cyclic imide resins represented by the formula (1) is not particularly limited but is preferably 500 to 1,000,000, more preferably 1,000 to 100,000, and still more preferably 3,000 to 50,000. When the weight average molecular weight (Mw) is in this range, the cyclic imide resins offer a sufficient strength of the curable resin composition and the cyclic imide groups at the terminals can be reacted efficiently.

The weight average molecular weight of the cyclic imide resin (A1) is preferably 10,000 to 1,000,000, more preferably 20,000 to 500,000, and still more preferably 40,000 to 300,000.

The weight average molecular weight of the cyclic imide resin (A2) is preferably 500 to 30,000, more preferably 500 to 20,000, and still more preferably 1,000 to 10,000.

The weight average molecular weight (Mw) as used herein refers to a weight average molecular weight measured by GPC relative to polystyrene standards under the conditions below.
[GPC measurement conditions]
Developing solvent: tetrahydrofuran
Flow rate: 0.6 mL/min
Columns: TSK Guardcolumn SuperH-L
   TSKgel SuperH4000 (6.0 mm I.D. × 15 cm × 1)
   TSKgel SuperH3000 (6.0 mm I.D. × 15 cm × 1)
   TSKgel SuperH2000 (6.0 mm I.D. × 15 cm × 2)
      (all manufactured by Tosoh Corporation)
Column temperature: 40°C
Sample injection volume: 20 µL (sample concentration: 0.5% by mass-tetrahydrofuran solution)
Detector: differential refractometer (RI)

The component (A1) and the component (A2) may be each a single resin or a combination of two or more resins. The use of the components (A) including two types of cyclic imide resins having different polymerization degrees is beneficial in that the minimum complex viscosity is not excessively low and the degree of TGV penetration is small, and also in that high adhesion to copper and glass can be obtained.

The blend ratio by mass of the component (A1) to the component (A2) is (A1) : (A2) = 98 : 2 to 50 : 50, and is preferably 95 : 5 to 60 : 40. When the composition contains the component (Al) and the component (A2) in this range, the minimum complex viscosity is not excessively low and the degree of TGV penetration is small, and also high adhesion to copper and glass can be obtained.

The cyclic imide resins as the components (A) may be produced by any method without limitation. For example, the cyclic imide resins may be produced by reacting an acid anhydride with a diamine to give an amine-terminated compound, and reacting the amine-terminated compound with an excess of maleic anhydride or citraconic anhydride.

Examples of the acid anhydrides include pyromellitic anhydride, maleic anhydride, succinic anhydride, 4,4'-carbonyldiphthalic anhydride, 4,4'-diphthalic anhydride, 4,4'-sulfonyldiphthalic anhydride, 4,4'-oxydiphthalic anhydride, and 4,4'-(4,4'-isopropylidenediphenoxy)diphthalic anhydride. Depending on the purpose, use application, or other factor, a single acid anhydride or a combination of two or more acid anhydrides may be used. From the point of view of electric properties of the cyclic imide resins, preferred acid anhydrides are pyromellitic anhydride, 4,4'-oxydiphthalic anhydride, and 4,4'-(4,4'-isopropylidenediphenoxy)diphthalic anhydride.

Examples of the diamines include aromatic diamines, such as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, 4,4'-diamino-3,3',5,5'-tetraethyldiphenylmethane, bis[4-(4-aminophenoxy)phenyl]sulfone, 4,4'-diaminodiphenylmethane, and 1,3-bis(4-aminophenoxy)benzene; aliphatic diamines, such as 1,12-diaminododecane, 1,10-diaminodecane, octyldiamine, 1,3-di(aminomethyl)cyclohexane, 1-amino-4-(aminomethyl)cyclohexane, 1,3-diaminoadamantane, isophoronediamine, 2,4,4-trimethylhexane-1,6-diamine, 2-methylpentane-1,5-diamine, and 3(4),8(9)-bis(aminomethyl)tricyclo[5.2.1.0(2,6)]decane; and dimer diamines. Depending on the purpose, use application, or other factor, a single diamine or a combination of two or more diamines may be used. From the point of view of electric properties of the cyclic imide resins, preferred diamines are such aromatic diamines as 2,2-bis(4-(4-aminophenoxy)phenyl)propane, 4,4'-diamino-3,3'-dimethyldiphenylmethane, 4,4'-diamino-3,3'-diethyldiphenylmethane, 4,4'-diaminodiphenyl ether, and 4,4'-diamino-3,3',5,5'-tetraethyldiphenylmethane; such aliphatic diamines as 1,12-diaminododecane, 1,10-diaminodecane, octyldiamine, 1,3-di(aminomethyl)cyclohexane, 1-amino-4-(aminomethyl)cyclohexane, 1,3-diaminoadanantane, isophoronediamine, 2,4,4-trimethylhexane-1,6-diamine, and 2-methylpentane-1,5-diamine; and dimer diamines. 1,12-Diaminododecane, dimer diamines, and isophoronediamine are particularly preferable.

The equivalent weight of the cyclic imide groups in the components (A) is preferably 0.001 to 0.5 mol/100 g, more preferably 0.003 to 0.4 mol/100 g, still more preferably 0.01 to 0.3 mol/100 g, and even more preferably 0.02 to 0.2 mol/100 g. This range is beneficial in that the curable resin composition gives cured products having low relative permittivity and low dielectric loss tangent.

The components (A) are added in an amount of 20.0 to 99.0% by mass based on the whole mass of the composition in order that the composition satisfies the conditions (α) to (δ) described later. In the case where an inorganic or organic filler described later is not added, the amount of the components (A) is preferably 50.0 to 99.0% by mass, and more preferably 60.0 to 99.0% by mass of the resin composition. When an inorganic or organic filler described later is added, the amount of the components (A) is preferably 20.0 to 80.0% by mass, and more preferably 25.0 to 75.0% by mass of the resin composition.

### [Curing catalysts (B)]

The component (B) is a curing catalyst, which is designed to promote curing of the resin composition.

Examples of the curing catalysts as the components (B) include, but are not particularly limited to, thermal radical polymerization initiators and thermal anionic polymerization initiators.

Examples of the thermal radical polymerization initiators include organic peroxides, such as methyl ethyl ketone peroxide, methylcyclohexanone peroxide, methylacetoacetate peroxide, acetylacetone peroxide, 1,1-bis(t-butylperoxy)3,3,5-trimethylcyclohexane, 1,1-bis(t-hexylperoxy)cyclohexane, 1,1-bis(t-hexylperoxy)3,3,5-trimethylcyclohexane, 1,1-bis(t-butylperoxy)cyclohexane, 2,2-bis(4,4-di-t-butylperoxycyclohexyl)propane, 1,1-bis(t-butylperoxy)cyclododecane, n-butyl-4,4-bis(t-butylperoxy)valerate, 2,2-bis(t-butylperoxy)butane, 1,1-bis(t-butylperoxy)-2-methylcyclohexane, t-butyl hydroperoxide, p-menthane hydroperoxide, 1,1,3,3-tetramethylbutyl hydroperoxide, t-hexyl hydroperoxide, dicumyl peroxide, 2,5-dimethyl-2,5-bis(t-butylperoxy)hexane, α,α'-bis(t-butylperoxy)diisopropylbenzene, t-butylcumyl peroxide, di-t-butyl peroxide, 2,5-dimethyl-2,5-bis(t-butylperoxy)hexyne-3, isobutyryl peroxide, 3,5,5-trimethylhexanoyl peroxide, octanoyl peroxide, lauroyl peroxide, cinnamic acid peroxide, m-toluoyl peroxide, benzoyl peroxide, diisopropyl peroxydicarbonate, bis(4-t-butylcyclohexyl) peroxydicarbonate, di-3-methoxybutyl peroxydicarbonate, di-2-ethylhexyl peroxydicarbonate, di-sec-butyl peroxydicarbonate, di(3-methyl-3-methoxybutyl) peroxydicarbonate, di(4-t-butylcyclohexyl) peroxydicarbonate, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 2,5-dimethyl-2,5-bis(2-ethylhexanoylperoxy)hexane, 1,1,3,3-tetramethylbutyl peroxy-2-ethylhexanoate, 1-cyclohexyl-1-methylethyl peroxy-2-ethylhexanoate, t-hexyl peroxy-2-ethylhexanoate, t-butyl peroxy-2-ethylhexanoate, t-butyl peroxyisobutyrate, t-butyl peroxymaleic acid, t-butyl peroxylaurate, t-butyl peroxy-3,5,5-trimethylhexanoate, t-butyl peroxyisopropyl monocarbonate, t-butyl peroxy-2-ethylhexyl monocarbonate, 2,5-dimethyl-2,5-bis(benzoylperoxy)hexane, t-butyl peroxyacetate, t-hexyl peroxybenzoate, t-butyl peroxy-m-toluoylbenzoate, t-butyl peroxybenzoate, bis(t-butylperoxy)isophthalate, t-butyl peroxyallyl monocarbonate, and 3,3'4,4'-tetra(t-butylperoxycarbonyl)benzophenone; and azo compounds, such as 2,2'-azobis(N-butyl-2-methylpropionamide), 2,2'-azobis(N-cyclohexyl-2-methylpropionamide), 2,2'-azobis[N-(2-methylpropyl)-2-methylpropionamide], 2,2'-azobis[N-(2-methylethyl)-2-methylpropionamide], 2,2'-azobis(N-hexyl-2-methylpropionamide), 2,2'-azobis(N-propyl-2-methylpropionamide), 2,2'-azobis(N-ethyl-2-methylpropionamide), 2,2'-azobis[2-methyl-N-(2-hydroxyethyl)propionamide], 2,2'-azobis[N-(2-propenyl)-2-methylpropionamide], 2,2'-azobis{2-methyl-N-[1,1-bis(hydroxymethyl)-2-hydroxyethyl]propionamide}, 2,2'-azobis[N-(2-propenyl)-2-methylpropionamide], and dimethyl-1,1'-azobis(1-cyclohexanecarboxylate).

Examples of the thermal anionic polymerization initiators include amine compounds, such as triethylamine, triethylenediamine, 2-(dimethylaminomethyl)phenol, 1,8-diaza-bicyclo[5.4.0]undecene-7, tris(dimethylaminomethyl)phenol, and benzyldimethylamine; imidazole compounds, such as 2-methylimidazole, 2-ethylimidazole, 2-phenylimidazole, 2-ethyl-4-methylimidazole, 2-undecylimidazole, 1-cyanoethyl-2-ethyl-4-methylimidazole, 2,4-diamino-6-[2-(2-methyl-1-imidazolyl)ethyl]-1,3,5-triazine, and 2-phenyl-4-hydroxy-5-methylimidazole; and organic phosphorus compounds, such as triphenylphosphine, tributylphosphine, trioctylphosphine, tetrabutylphosphonium hexafluorophosphate, tetrabutylphosphonium tetraphenylborate, tetrabutylphosphonium acetate, tetraphenylphosphonium tetraphenylborate, tetraphenylphosphonium bromide, tetrabutylphosphonium bromide, tetrabutylphosphonium laurate, tetraphenylphosphonium hydrogen phthalate, bis(tetraphenylphosphonium) dihydrogen pyromellitate, and bis(tetrabutylphosphonium) dihydrogen pyromellitate.

Among those described above, the thermal anionic polymerization initiators are preferable. In particular, such imidazole compounds as 2-ethyl-4-methylimidazole, 1-cyanoethyl-2-ethyl-4-methylimidazole, 2,4-diamino-6-[2-(2-methyl-1-imidazolyl)ethyl]-1,3,5-triazine, and 2-phenyl-4-hydroxy-5-methylimidazole are particularly preferable.

The curing catalysts may be used singly, or two or more of them may be used in combination.

The component (B) is added in an amount of 0.1 to 5.0% by mass based on the whole mass of the composition. The amount is preferably 0.2 to 4.5 parts by mass, and more preferably 0.3 to 4.0 parts by mass per 100 parts by mass of the components (A). Adding the component (B) in an amount of 0.1 to 5.0% by mass based on the whole mass of the composition is beneficial in that the component (B) does not adversely affect properties of cured products of the resin composition and the resin composition is cured sufficiently.

The curable resin composition of the present invention satisfies all the conditions (α) to (δ) described below. These conditions will be described in detail below.
[(α) The resin composition has a minimum complex viscosity at 40 to 150°C of 100 to 10,000 Pa·s as measured at a frequency of 1 Hz.]

One of the causes of the penetration of a resin into glass core through holes is the viscosity being excessively lowered when a glass core bonding film is applied. When a bonding film that has been heated is applied to a glass core by the application of pressure, the molten resin is allowed to penetrate into through holes.

In view of this, the minimum complex viscosity of the resin composition at 40 to 150°C as measured at a frequency of 1 Hz is 100 to 10,000 Pa·s, preferably 300 to 7,000 Pa·s, and still more preferably 500 to 5,000 Pa·s. If the minimum complex viscosity measured at a frequency of 1 Hz is less than 100 Pa·s, the resin will penetrate into glass core through holes. If the minimum complex viscosity measured at a frequency of 1 Hz is higher than 10,000 Pa·s, the adhesion with respect to a glass core is lowered.

The term "minimum complex viscosity" as used herein refers to a value measured in the following manner.

### (Measurement conditions)

The curable resin composition that has been prepared is applied onto a PET film so that the thickness will be 25 µm. The uncured film obtained, weighing 1 g, is folded so that the film can be sandwiched between parallel plates with a diameter of 18 mm, thus giving a measurement sample. The sample is analyzed on rheometer Rheosol-G3000 (manufactured by UBM) by being heated at a heating rate of 5°C/min from a starting temperature of 40°C to 150°C with measurement temperature intervals of 2°C at a frequency of 1 Hz or 2 Hz while measuring the minimum complex viscosity.
[(β) The resin composition has a minimum complex viscosity at 40 to 150°C of 10 to 2,000 Pa·s as measured at a frequency of 2 Hz.]

Complex viscosities at different frequencies are also important to prevent the penetration of resin into glass core through holes.

Specifically, the minimum complex viscosity of the resin composition at 40 to 150°C as measured at a frequency of 2 Hz is 10 to 2,000 Pa·s, preferably 20 to 1,500 Pa·s, and still more preferably 50 to 1,000 Pa·s. If the minimum complex viscosity measured at a frequency of 2 Hz is less than 10 Pa·s, the resin will penetrate into glass core through holes. If the minimum complex viscosity measured at a frequency of 2 Hz is higher than 2,000 Pa·s, the adhesion with respect to a glass core is lowered.
[(γ) A cured product of the resin composition has a die shear strength with glass at 25°C of 10 MPa or more.]

In order to prevent the separation of a cured product of the resin composition from glass, the resin composition, when cured on glass at 180°C for 2 hours, gives a cured product having a die shear strength of 10 MPa or more, preferably 15 MPa or more, and more preferably 20 MPa or more. If the die shear strength of the cured product of the resin composition on glass is lower than 10 MPa, the resin composition is easily separated from the glass in a reliability test.

Herein, the die shear strength is a value measured in the following manner.

### (Measurement conditions)

The curable resin composition that has been prepared is applied onto a PET film so that the thickness will be 25 µm. The resultant film is placed on a substrate (glass or copper) so that the curable resin composition applied on the PET film will be in contact with (opposed to) the substrate, and is laminated using vacuum laminator V-130 (manufactured by Nikko-Materials Co., Ltd.) at 80°C, a vacuum of 0.6 hPa, and a pressure of 0.3 MPa for 60 seconds. The unit is cooled to room temperature, and the PET film is removed. A silicon chip of 3 mm in length × 3 mm in width is placed onto the surface of the curable resin composition and is laminated using vacuum laminator V-130 at 100°C, a vacuum of 0.6 hPa, and a pressure of 0.3 MPa for 60 seconds. Subsequently, the resin composition is thermally cured at 180°C for 2 hours. The die shear strength is measured by applying a shear force to the silicon chip using universal bond tester 4000 (manufactured by Nordson DAGE).
[(δ) A cured product of the resin composition has a die shear strength with copper at 25°C of 10 MPa or more.]

In order to prevent the separation of a cured product of the resin composition from copper, the resin composition, when cured on copper at 180°C for 2 hours, gives a cured product having a die shear strength of 10 MPa or more, preferably 15 MPa or more, and more preferably 20 MPa or more. If the die shear strength of the cured product of the resin composition on copper is lower than 10 MPa, the resin composition is easily separated from the copper in a reliability test.

The curable resin composition of the present invention may be used in any application which is not particularly limited, and is preferably a glass core bonding film.

### [Inorganic fillers]

The curable resin composition of the present invention may further contain an inorganic filler as required.

Examples of the inorganic fillers include, but are not particularly limited to, metal oxides, such as silica, titanium dioxide, yttrium oxide, aluminum oxide, magnesium oxide, zinc oxide, and beryllium oxide; metal nitrides, such as boron nitride, aluminum nitride, and silicon nitride; carbon-containing particles, such as silicon carbide, diamond, and graphene; hollow particles, such as silica balloons (hollow silica), carbon balloons, alumina balloons, and aluminosilicate balloons; pure metals, such as gold, silver, copper, palladium, aluminum, nickel, iron, cobalt, titanium, manganese, zinc, tungsten, platinum, lead, and tin; alloys, such as solder and steel; magnetic metal alloys, such as stainless steel, Fe-Cr-Al-Si alloy, Fe-Si-Al alloy, Fe-Ni alloy, Fe-Cu-Si alloy, Fe-Si alloy, Fe-Si-B(-Cu-Nb) alloy, Fe-Si-Cr-Ni alloy, Fe-Si-Cr alloy, and Fe-Si-Al-Ni-Cr alloy; and ferrites, such as hematite (Fe₂O₃), magnetite (Fe₃O₄), Mn-Zn ferrite, Ni-Zn ferrite, Mg-Mn ferrite, Zr-Mn ferrite, Ti-Mn ferrite, Mn-Zn-Cu ferrite, barium ferrite, and strontium ferrite. They may be used alone, or two or more of them may be used in combination.

The addition of metal oxides, metal nitrides, and carbon-containing particles can reduce the linear expansion coefficient of cured products of the curable resin composition and can increase the thermal conductivity of cured products of the curable resin composition. The addition of hollow particles allows cured products of the curable resin composition to reduce such properties as relative permittivity, dielectric loss tangent, and density. The addition of metals and alloys allows cured products of the resin composition to increase such properties as electrical conductivity and thermal conductivity of cured products of the resin composition. Furthermore, the addition of ferrites can impart electromagnetic wave absorption capability to cured products of the curable resin composition.

The shape of the inorganic fillers is not particularly limited and may be, for example, spherical, scaly, flake-like, acicular, rod-like, or elliptical. In particular, spherical, scaly, flake-like, elliptical, and rod-like shapes are preferable, and spherical, scaly, flake-like, and elliptical shapes are more preferable.

The primary particle size of the inorganic fillers is not particularly limited, but the median diameter of primary particles measured with a laser diffraction grain size distribution analyzer is preferably 0.05 to 500 µm, more preferably 0.1 to 300 µm, and still more preferably 1 to 100 µm. This range is beneficial in that the inorganic filler can be easily dispersed uniformly in the curable resin composition, and the inorganic filler does not settle, separate, or become unevenly distributed over time.

The amount in which the inorganic filler is added is not particularly limited but is preferably 5 to 300 parts by mass, more preferably 10 to 250 parts by mass, and still more preferably 50 to 200 parts by mass per 100 parts by mass of the components (A) in the curable resin composition of the present invention.

### [Organic fillers]

The curable resin composition of the present invention may further contain an organic filler.

Examples of the organic fillers include, but are not particularly limited to, thermoplastic resin particles, such as acrylic-butadiene copolymers, styrene-butadiene copolymers, acrylonitrile-styrene-butadiene copolymers, and acrylic block copolymers, carbon fibers, cellulose fibers, silicone powders, acrylic powders, polytetrafluoroethylene powders, polyethylene powders, and polypropylene powders. They may be used alone, or two or more of them may be used in combination.

The shape of the organic fillers is not particularly limited and may be, for example, spherical, fibrous, flake-like, acicular, rod-like, or elliptical. In particular, spherical, fibrous, flake-like, elliptical, and rod-like shapes are preferable, and spherical, fibrous, flake-like, and elliptical shapes are more preferable.

The primary particle size of the organic fillers is not particularly limited, but the median diameter of primary particles measured with a laser diffraction grain size distribution analyzer is preferably 0.05 to 500 µm, more preferably 0.1 to 300 µm, and still more preferably 1 to 100 µm. This range is beneficial in that the organic particles can be easily dispersed uniformly in the curable resin composition, and the organic particles do not settle, separate, or become unevenly distributed over time.

The amount in which the organic filler is added is not particularly limited but is preferably 1 to 400 parts by mass, more preferably 5 to 200 parts by mass, and still more preferably 10 to 100 parts by mass per 100 parts by mass of the components (A) in the curable resin composition of the present invention. This range ensures that the strength of the curable resin composition can be increased.

### [Adhesion imparting agents]

Where necessary, the curable resin composition of the present invention may contain an adhesion imparting agent to attain adhesiveness or tackiness (pressure-sensitive adhesiveness). Examples of the adhesion imparting agents include epoxy resins, acrylic resins, urethane resins, phenolic resins, terpene resins, and silane coupling agents. Of these, epoxy resins, acrylic resins, and silane coupling agents are preferable for imparting adhesiveness, and terpene resins are preferable for imparting tackiness (pressure-sensitive adhesiveness).

Examples of the epoxy resins include, but are not particularly limited to, known epoxy resins that are liquid or solid at room temperature, including bisphenol A-type epoxy resins, bisphenol F-type epoxy resins, biphenol-type epoxy resins, such as 3,3',5,5'-tetramethyl-4,4'-biphenol-type epoxy resins and 4,4'-biphenol-type epoxy resins, biphenylaralkyl-type epoxy resins, phenol novolac-type epoxy resins, cresol novolac-type epoxy resins, bisphenol A novolac-type epoxy resins, naphthalenediol-type epoxy resins, trisphenylolmethane-type epoxy resins, tetrakisphenylolethane-type epoxy resins, epoxy resins derived from phenoldicyclopentadiene novolac-type epoxy resins by the hydrogenation of aromatic rings, and alicyclic epoxy resins.

Examples of the acrylic resins include, but are not particularly limited to, lauryl acrylate, stearyl acrylate, isostearyl acrylate, phenoxyethyl acrylate, phenoxydiethylene glycol acrylate, tetrahydrofurfuryl acrylate, isobornyl acrylate, 2-acryloyloxyethyl phthalate, 2-acryloyloxyethyl acid phosphate, polyethylene glycol diacrylate, dimethyloltricyclodecane diacrylate, trimethylolpropane triacrylate, dipentaerythritol hexaacrylate, dioxane glycol diacrylate, 9,9-bis[4-(2-hydroxyethoxy)phenyl]fluorene diacrylate, lauryl methacrylate, phenoxyethyl methacrylate, phenoxydiethylene glycol methacrylate, tetrahydrofurfuryl methacrylate, isobornyl methacrylate, 2-methacryloyloxyethyl phthalate, 2-methacryloyloxyethyl acid phosphate, polyethylene glycol dimethacrylate, and dimethyloltricyclodecane dimethacrylate.

Examples of the terpene resins include, but are not particularly limited to, homopolymers of terpenes, for example, monoterpenes, such as α-pinene, β-pinene, dipentene, and limonene, sesquiterpenes, such as cedrene and farnesene, and diterpenes, such as abietic acid; aromatic-modified terpene resins that are copolymers of the above terpenes with aromatic vinyl compounds, such as styrene and α-methylstyrene; and terpene phenol resins that are copolymers of the above terpenes with phenols, such as phenol, cresol, hydroquinone, naphthol, and bisphenol A. Furthermore, for example, hydrogenated terpene resins obtained by hydrogenating these terpene resins may also be used.

Examples of the silane coupling agents include, but are not particularly limited to, n-propyltrimethoxysilane, n-propyltriethoxysilane, n-octyltrimethoxysilane, n-octyltriethoxysilane, phenyltrimethoxysilane, phenyltriethoxysilane, methyltrimethoxysilane, methyltriethoxysilane, 2-[methoxy(polyethyleneoxy)propyl]-trimethoxysilane, methoxytri(ethyleneoxy)propyltrimethoxysilane, 3-glycidoxypropyltrimethoxysilane, 3-aminopropyltrimethoxysilane, N-phenyl-3-aminopropyltrimethoxysilane, 3-mercaptopropyltrimethoxysilane, 3-(methacryloyloxy)propyltrimethoxysilane, 3-isocyanatopropyltriethoxysilane, and 3-isocyanatopropyltrimethoxysilane.

The amount in which the adhesion imparting agent is added is not particularly limited but is preferably 0.1 to 20 parts by mass, more preferably 0.5 to 10 parts by mass, and still more preferably 1 to 5 parts by mass per 100 parts by mass of the components (A). This range ensures that the adhesion or tack strength of the curable resin composition will be further enhanced without altering mechanical properties of the resin composition.

### [Antioxidants]

The resin composition of the present invention may contain an antioxidant as required.

Examples of the antioxidants include, but are not particularly limited to, phenolic antioxidants, such as n-octadecyl-3-(3,5-di-t-butyl-4-hydroxyphenyl)propionate, n-octadecyl-3-(3,5-di-t-butyl-4-hydroxyphenyl)acetate, neododecyl-3-(3,5-di-t-butyl-4-hydroxyphenyl)propionate, dodecyl-β-(3,5-di-t-butyl-4-hydroxyphenyl)propionate, ethyl-α-(4-hydroxy-3,5-di-t-butylphenyl)isobutyrate, octadecyl-α-(4-hydroxy-3,5-di-t-butylphenyl)isobutyrate, octadecyl-α-(4-hydroxy-3,5-di-t-butyl-4-hydroxyphenyl)propionate, 2-(n-octylthio)ethyl-3,5-di-t-butyl-4-hydroxyphenylacetate, 2-(n-octadecylthio)ethyl-3,5-di-t-butyl-4-hydroxyphenylacetate, 2-(n-octadecylthio)ethyl-3-(3,5-di-t-butyl-4-hydroxyphenyl)propionate, 2-(2-stearoyloxyethylthio)ethyl-7-(3-methyl-5-t-butyl-4-hydroxyphenyl)heptanoate, 2-hydroxyethyl-7-(3-methyl-5-t-butyl-4-hydroxyphenyl)propionate, and pentaerythritol tetrakis[3-(3,5-di-t-butyl-4-hydroxyphenyl)propionate]; sulfur-containing antioxidants, such as dilauryl-3,3'-thiodipropionate, dimyristyl-3,3'-thiodipropionate, distearyl-3,3'-thiodipropionate, ditridecyl-3,3'-thiodipropionate, and pentaerythrityl tetrakis(3-laurylthiopropionate); and phosphorus-containing antioxidants, such as tridecyl phosphite, triphenyl phosphite, tris(2,4-di-t-butylphenyl) phosphite, 2-ethylhexyldiphenyl phosphite, diphenyltridecyl phosphite, 2,2-methylenebis(4,6-di-t-butylphenyl)octyl phosphite, distearyl pentaerythritol diphosphite, bis(2,6-di-t-butyl-4-methylphenyl)pentaerythritol diphosphite, and 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine.

The amount in which the antioxidant is added is not particularly limited but is preferably 0.00001 to 5 parts by mass, more preferably 0.0001 to 4 parts by mass, and still more preferably 0.001 to 3 parts by mass per 100 parts by mass of the components (A). This range ensures that the curable resin composition can be prevented from oxidation while mechanical properties of the resin composition are not altered.

### [Flame retardants]

Where necessary, the curable resin composition of the present invention may contain a flame retardant to attain flame retardancy.

Examples of the flame retardants include, but are not particularly limited to, phosphorus-containing flame retardants, metal hydrates, halogen-containing flame retardants, and guanidine-containing flame retardants. Examples of the phosphorus-containing flame retardants include red phosphorus, ammonium phosphates, such as monoammonium phosphate, diammonium phosphate, triammonium phosphate, and ammonium polyphosphate, inorganic nitrogen-containing phosphorus compounds, such as guanidine phosphate and phosphoramides, phosphoric acid, phosphine oxide, triphenyl phosphate, tricresyl phosphate, trixylenyl phosphate, cresyl diphenyl phosphate, cresyl di-2,6-xylenyl phosphate, resorcinol bis(diphenyl phosphate), 1,3-phenylene bis(di-2,6-xylenyl phosphate), bisphenol A-bis(diphenyl phosphate), 1,3-phenylene bis(diphenyl phosphate), divinyl phenylphosphonate, diallyl phenylphosphonate, bis(1-butenyl) phenylphosphonate, phenyl diphenylphosphinate, methyl diphenylphosphinate, phosphazene compounds, such as bis(2-allylphenoxy)phosphazene and dicresyl phosphazene, melamine phosphate, melamine pyrophosphate, melamine polyphosphate, melam polyphosphate, melem polyphosphate, 9,10-dihydro-9-oxa-10-phosphaphenanthrene-10-oxide, and 10-(2,5-dihydroxyphenyl)-9,10-dihydro-9-oxa-10-phosphaphenanthrene-10-oxide. Examples of the metal hydrates include aluminum hydroxide hydrate and magnesium hydroxide hydrate. Examples of the halogen-containing flame retardants include hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, and 2,4,6-tris(tribromophenoxy)-1,3,5-triazine. Examples of the guanidine-containing flame retardants include guanidine sulfamate and guanidine phosphate.

The amount in which the flame retardant is added is not particularly limited but is preferably 0.01 to 5 parts by mass, more preferably 0.05 to 4 parts by mass, and still more preferably 0.1 to 3 parts by mass per 100 parts by mass of the components (A). This range ensures that the curable resin composition will attain flame retardancy while mechanical properties of the resin composition are not altered.

### [Production methods]

For example, the curable resin composition of the present invention may be produced by a method involving mixing of the components (A) and (B) and optionally other additives as required using, for example, a planetary mixer (manufactured by INOUE MFG., INC.) or stirring machine THINKY CONDITIONING MIXER (manufactured by THINKY CORPORATION). Preferably, the method may further involve adding and mixing an organic solvent (such as, for example, cyclopentanone, cyclohexanone, mesitylene, anisole, dibutyl ether, diphenyl ether, 1,4-dioxane, N,N-dimethylformamide, N,N-dimethylacetamide, dimethyl sulfoxide, or N-methylpyrrolidone). The addition of an organic solvent can reduce the viscosity of the curable resin composition, allowing for more uniform mixing. The organic solvent is distilled off under reduced pressure after mixing to obtain the curable resin composition. Alternatively, when used as a film or the like, the curable resin composition may be used as such without distilling off the organic solvent or may be used after adjusted to a desired concentration.

### WORKING EXAMPLES

The present invention will be described in greater detail below based on working examples and comparative examples. However, the present invention is not limited to the working examples given below.

The molecular weight described in the working examples is the weight average molecular weight (Mw) measured by gel permeation chromatography (GPC) relative to polystyrene standards. The measurement conditions are as follows:
[GPC measurement conditions]
Developing solvent: tetrahydrofuran
Flow rate: 0.6 mL/min
Columns: TSK Guardcolumn SuperH-L
   TSKgel SuperH4000 (6.0 mm I.D. × 15 cm × 1)
   TSKgel SuperH3000 (6.0 mm I.D. × 15 cm × 1)
   TSKgel SuperH2000 (6.0 mm I.D. × 15 cm × 2)
      (all manufactured by Tosoh Corporation)
Column temperature: 40°C
Sample injection volume: 20 µL (sample concentration: 0.5% by mass-tetrahydrofuran solution)
Detector: differential refractometer (RI)

### (A) Cyclic imide resins

### (A-1)

575 g (1.1 mol) of dimer diamine and 520 g (1.0 mol) of 4,4'-(4,4'-isopropylidenediphenoxy)diphthalic anhydride were added to 2,000 g of N-methylpyrrolidone (water content: 0.5%). The mixture was stirred at 25°C for 3 hours and was subsequently further stirred at 150°C for 5 hours. To the solution obtained, 196 g (2.0 mol) of maleic anhydride, 82 g (1.0 mol) of sodium acetate, and 204 g (2.0 mol) of acetic anhydride were added. The mixture was stirred at 80°C for 1 hour. Subsequently, 5,000 g of toluene was added, and the mixture was water-washed and dehydrated. The solvent was distilled off under reduced pressure. Bismaleimide (A-1) represented by the formula below was thus obtained. (Weight average molecular weight: 70,000, maleimide equivalent weight: 0.0077 mol/100 g) 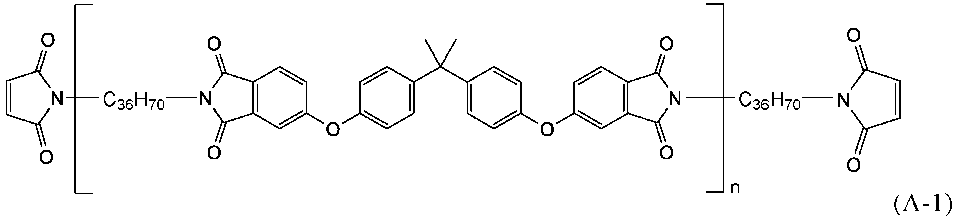 n ≈ 25 (average)

### (A-2)

210 g (1.05 mol) of 1,12-dodecanediamine and 218 g (1.0 mol) of pyromellitic anhydride were added to 2,000 g of N-methylpyrrolidone (water content: 0.5%). The mixture was stirred at 25°C for 3 hours and was subsequently further stirred at 150°C for 5 hours. To the solution obtained, 196 g (2.0 mol) of maleic anhydride, 82 g (1.0 mol) of sodium acetate, and 204 g (2.0 mol) of acetic anhydride were added. The mixture was stirred at 80°C for 1 hour. Subsequently, 5,000 g of toluene was added, and the mixture was water-washed and dehydrated. The solvent was distilled off under reduced pressure. Bismaleimide (A-2) represented by the formula below was thus obtained. (Weight average molecular weight: 80,000, maleimide equivalent weight: 0.0043 mol/100 g) 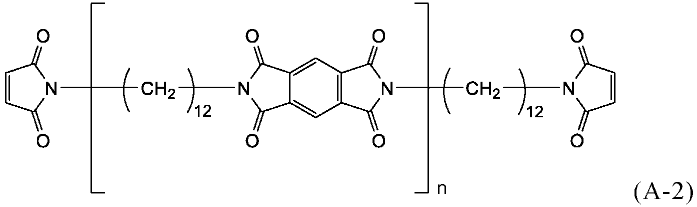 n ≈ 110 (average)

### (A-3)

94 g (0.55 mol) of isophoronediamine, 278 g (0.55 mol) of 2,2-bis[4-(4-aminophenoxy)phenyl]propane, and 520 g (1.0 mol) of 4,4'-(4,4'-isopropylidenediphenoxy)diphthalic anhydride were added to 2,000 g of N-methylpyrrolidone (water content: 0.6%). The mixture was stirred at 25°C for 3 hours and was subsequently further stirred at 150°C for 5 hours. To the solution obtained, 196 g (2.0 mol) of maleic anhydride, 82 g (1.0 mol) of sodium acetate, and 204 g (2.0 mol) of acetic anhydride were added. The mixture was stirred at 80°C for 1 hour. Subsequently, 5,000 g of toluene was added, and the mixture was water-washed and dehydrated. The solvent was distilled off under reduced pressure. Bismaleimide (A-3) represented by the formula below was thus obtained. (Weight average molecular weight: 95,000, maleimide equivalent weight: 0.0065 mol/100 g) 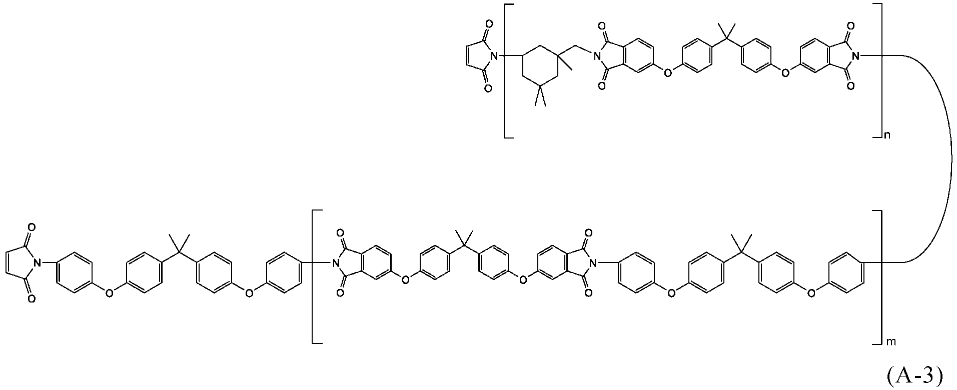 n ≈ 20 (average), m ≈ 20 (average)

### (A-4)

300 g (1.5 mol) of 1,12-dodecanediamine and 310 g (1.0 mol) of 4,4'-oxydiphthalic anhydride were added to 900 g of xylene. The mixture was stirred at 25°C for 3 hours and was subsequently further stirred at 140°C for 5 hours. To the solution obtained, 196 g (2.0 mol) of maleic anhydride, 82 g (1.0 mol) of sodium acetate, and 204 g (2.0 mol) of acetic anhydride were added. The mixture was stirred at 80°C for 1 hour. Subsequently, 2,000 g of toluene was added, and the mixture was water-washed and dehydrated. The solvent was distilled off under reduced pressure. Bismaleimide (A-4) represented by the formula below was thus obtained. (Weight average molecular weight: 2,200, maleimide equivalent weight: 0.16 mol/100 g) 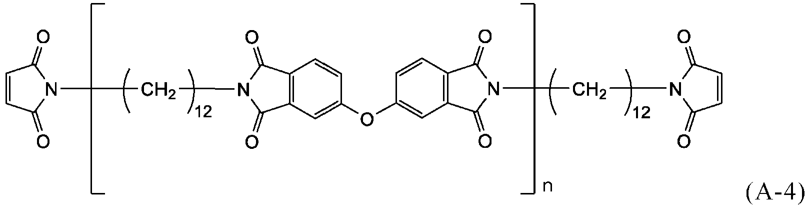 n ≈ 2 (average)

### (A-5)

Maleimide resin represented by the formula below (BMI-3000, manufactured by Designer Molecules Inc.) (Weight average molecular weight: 10,000, maleimide equivalent weight: 0.044 mol/100 g) 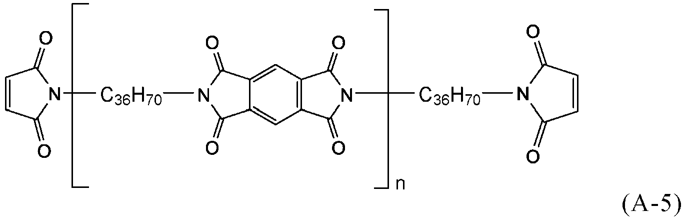 n ≈ 8 (average)

### (A-6)

Maleimide resin represented by the formula below (BMI-1500, manufactured by Designer Molecules Inc.) (Weight average molecular weight: 3,000, maleimide equivalent weight: 0.067 mol/100 g) 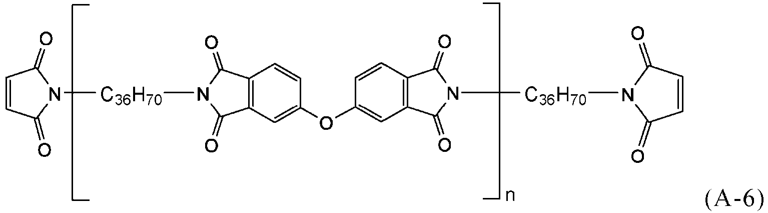 n ≈ 4 (average)

### (A-7)

Maleimide resin represented by the formula below (SLK-6895, manufactured by Shin-Etsu Chemical Co., Ltd.) (Weight average molecular weight: 700, maleimide equivalent weight: 0.29 mol/100 g) 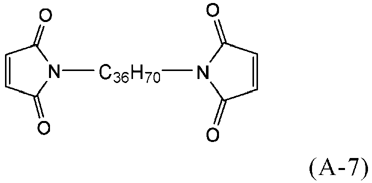 n = 0

### (A-8)

150 g (0.75 mol) of 1,12-dodecanediamine, 258 g (0.75 mol) of 4,4'-(1,4-phenylenediisopropylidene)bisaniline, and 310 g (1.0 mol) of 4,4'-oxydiphthalic anhydride were added to 1,300 g of xylene. The mixture was stirred at 25°C for 3 hours and was subsequently further stirred at 140°C for 5 hours. To the solution obtained, 196 g (2.0 mol) of maleic anhydride, 82 g (1.0 mol) of sodium acetate, and 204 g (2.0 mol) of acetic anhydride were added. The mixture was stirred at 80°C for 1 hour. Subsequently, 2,000 g of toluene was added, and the mixture was water-washed and dehydrated. The solvent was distilled off under reduced pressure. Bismaleimide (A-8) represented by the formula below was thus obtained. (Weight average molecular weight: 3,300, maleimide equivalent weight: 0.11 mol/100 g) 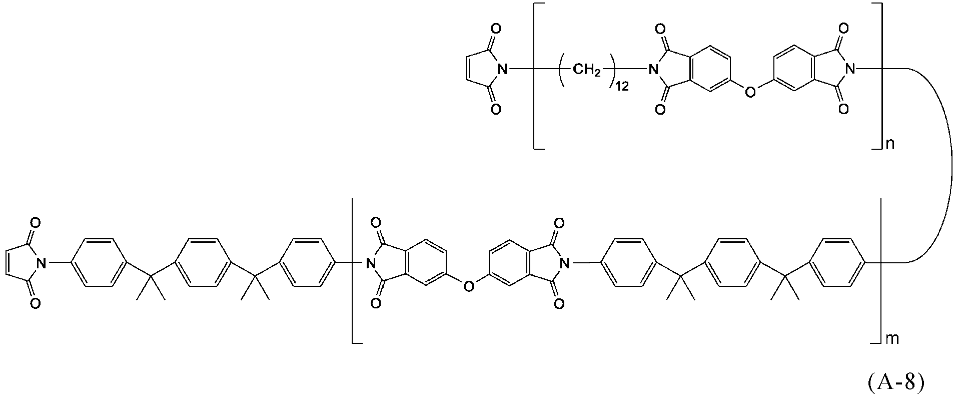 n ≈ 2 (average), m ≈ 2 (average)

### (A'-1)

455 g (0.90 mol) of 2,2-bis[4-(4-aminophenoxy)phenyl]propane, 196 g (2.0 mol) of maleic anhydride, 82 g (1.0 mol) of sodium acetate, and 204 g (2.0 mol) of acetic anhydride were added to 1,300 g of xylene. The mixture was stirred at 80°C for 1 hour. Subsequently, 2,000 g of toluene was added, and the mixture was water-washed and dehydrated. The solvent was distilled off under reduced pressure. Bismaleimide (A'-1) represented by the formula below was thus obtained. (Weight average molecular weight: 570, maleimide equivalent weight: 0.35 mol/100 g)

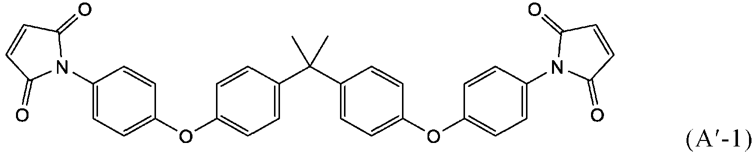

### (B) Curing catalyst

### (B-1) 2-Ethyl-4-methylimidazole

### (C) Adhesion imparting agents

(C-1) Phenoxy-type epoxy resin (product name: "jER-1256" (manufactured by Mitsubishi Chemical Group Corporation)
(C-2) Biphenylaralkyl-type epoxy resin (product name: "NC-3000" (manufactured by Nippon Kayaku Co., Ltd.)

### (D) Inorganic filler

(D-1) Silica "SFP-130MC" (median diameter of primary particles: 0.6 µm) (manufactured by Denka Company Limited)

### [Method of preparing curable resin compositions]

In working examples 1 to 6 and comparative examples 1 to 6, the components were added in amounts (parts by mass) described in Table 1, and 100 parts by mass of cyclopentanone was added to 100 parts by mass of the total of the components. The components were mixed. The mixture was kneaded with a planetary mixer (manufactured by INOUE MFG., INC.) at 80°C for 30 minutes and was cooled to 25°C. The solution obtained was transferred to a flask, and the solvent was distilled off under reduced pressure. Curable resin compositions were thus prepared.

### [Minimum complex viscosities at frequencies of 1 Hz and 2 Hz]

The curable resin composition prepared was applied onto a PET film so that the thickness would be 25 µm. The film obtained, weighing 1 g, was folded so that the film could be sandwiched between parallel plates with a diameter of 18 mm. The film was analyzed on rheometer Rheosol-G3000 (manufactured by UBM) by being heated at a heating rate of 5°C/min from a starting temperature of 40°C to 150°C with measurement temperature intervals of 2°C at a frequency of 1 Hz or 2 Hz while measuring the minimum complex viscosity. The results are as shown in Table 1.

### [Die shear strength]

The curable resin composition prepared was applied onto a PET film so that the thickness would be 25 µm. The resultant film was placed on a substrate so that the side opposite from the PET film would be in contact with the substrate, and was laminated using vacuum laminator V-130 (manufactured by Nikko-Materials Co., Ltd.) at 80°C, a vacuum of 0.6 hPa, and a pressure of 0.3 MPa for 60 seconds. The unit was cooled to room temperature, and the PET film was removed. A silicon chip of 3 mm in length × 3 mm in width was placed and was laminated using vacuum laminator V-130 at 100°C, a vacuum of 0.6 hPa, and a pressure of 0.3 MPa for 60 seconds. Subsequently, the resin composition was thermally cured at 180°C for 2 hours. The die shear strength was measured by applying a shear force to the silicon chip using universal bond tester 4000 (manufactured by Nordson DAGE). The substrate used here was glass or copper. The results are as shown in Table 1. In Table 1, "×" indicates that the resin composition could not be laminated on the substrate and the die shear strength could not be measured.

### [Degree of TGV (through glass via) penetration]

The curable resin composition prepared was applied onto a PET film so that the thickness would be 25 µm. The resultant film was placed onto a glass core of 50 mm in length × 50 mm in width × 500 µm in thickness that had 100 µm diameter through-hole vias at pitches of 300 µm so that the side opposite from the PET film would be in contact with the glass core, and was laminated using vacuum laminator V-130 at 100°C, a vacuum of 0.6 hPa, and a pressure of 0.3 MPa for 60 seconds. Subsequently, the resin composition was thermally cured at 180°C for 2 hours. Cross sections of the through holes were observed with electron microscope D-500 (manufactured by KEYENCE CORPORATION), and the distance to which the resin had penetrated into the through hole was measured. The results are as shown in Table 1.

### [Relative permittivity and dielectric loss tangent]

The curable resin composition prepared was sandwiched between molds designed for a sample size of 30 mm in length × 40 mm in width × 100 µm in thickness, and was press-cured at 180°C and 3 MPa for 1 hour to give a test sample. Network analyzer E5063-2D5 (manufactured by Keysight) and a strip line type measurement system (manufactured by KEYCOM Corporation) were connected to the prepared test sample, and the relative permittivity and the dielectric loss tangent at a frequency of 10 GHz were measured. The results are as shown in Table 1.

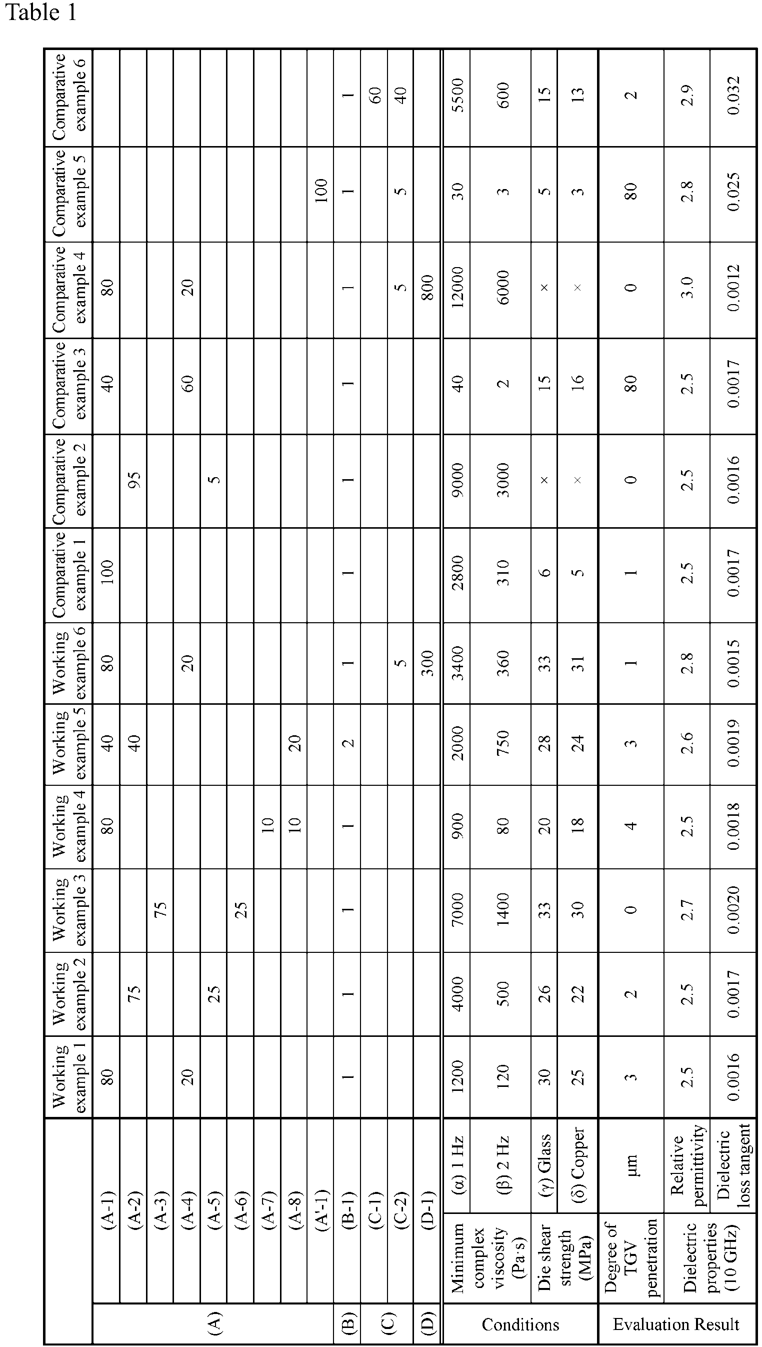

The curable resin compositions of working examples 1 to 6 gave cured products that had low relative permittivity and low dielectric loss tangent, exhibited high values of die shear strength of glass and copper, and had a small degree of resin penetration into the glass core through holes.

In comparative example 1, the values of die shear strength of glass and copper were low and a reliability test resulted in separation.

In comparative examples 2 and 4, the minimum complex viscosities were high and the resin compositions could not be laminated onto the substrates.

In comparative example 3, the minimum complex viscosities were low and the resin penetrated farther into the through holes.

The resin composition of comparative example 5 did not contain any components (A) and had low minimum complex viscosities. Thus, the resin penetrated farther into the through holes.

The resin composition of comparative example 6 did not contain any components (A) and had high dielectric loss tangent.

## Claims

1. A curable resin composition comprising:
(A) cyclic imide resins represented by the following formula (1) in an amount of 20.0 to 99.0% by mass based on the whole mass of the composition, 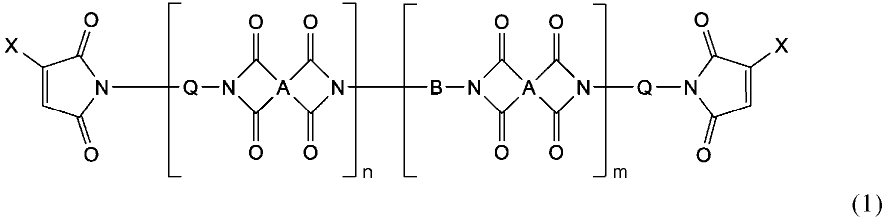 wherein each A independently represents a tetravalent organic group containing a cyclic structure, each Q independently represents a divalent aliphatic hydrocarbon group having 6 or more carbon atoms and optionally containing a heteroatom, or a divalent hydrocarbon group derived from a dimer acid skeleton, each B independently represents an arylene group having 6 or more carbon atoms and optionally containing a heteroatom, each X independently represents a hydrogen atom or a methyl group, n is 0 to 200, m is 0 to 200, and the repeating units in brackets with the subscripts n and m are bonded in an order that is not limited; and
(B) a curing catalyst in an amount of 0.1 to 5.0% by mass based on the whole mass of the composition,
wherein the cyclic imide resins (A) contain
a cyclic imide resin (A1) represented by the formula (1) in which n + m is 21 or greater, and
a cyclic imide resin (A2) represented by the formula (1) in which n is 0 to 10 and m is 0 to 10,
wherein the cyclic imide resins (A) contain the cyclic imide resins (A1) and (A2) in a mass ratio of (A1) : (A2) = 98 : 2 to 50 : 50, and
wherein the curable resin composition satisfies all of the following conditions (α) to (δ) in which:
(α) the resin composition has a minimum complex viscosity at 40 to 150°C of 100 to 10,000 Pa·s as measured at a frequency of 1 Hz,
(β) the resin composition has a minimum complex viscosity at 40 to 150°C of 10 to 2,000 Pa·s as measured at a frequency of 2 Hz,
(γ) a cured product of the resin composition has a die shear strength with glass at 25°C of 10 MPa or more, and
(δ) a cured product of the resin composition has a die shear strength with copper at 25°C of 10 MPa or more.

2. The curable resin composition according to claim 1, wherein the cyclic imide resin (A1) has a weight average molecular weight of 10,000 to 1,000,000.

3. The curable resin composition according to claim 1, wherein the cyclic imide resin (A2) has a weight average molecular weight of 500 to 30,000.

4. The curable resin composition according to claim 1, wherein the component (B) is an imidazole compound.

5. The curable resin composition according to claim 1, wherein the curable resin composition is a glass core bonding film.

6. A glass core adhesive comprising the curable resin composition according to claim 1.
